# EUROPEAN PATENT SPECIFICATION

(11) **EP 0 360 725 B1**
(45) Date of publication and mention of the grant of the patent: **11.01.1995**
(21) Application number: 89480124.0
(22) Date of filing: 01.08.1989
(51) Int. Cl.: H04M 11/06

(54) **Method for application definition of telephone keys**
Verfahren zur Definierung der Anwendung von Fernsprechertasten
Méthode pour définir l'application de touches de téléphone

(30) Priority: 19.09.1988 US 246474
(43) Date of publication of application: 28.03.1990
(73) Proprietor: ROLM COMPANY, Santa Clara, CA 95052 (US)
(72) Inventor: Dang, Mieu-Hong, Austin Texas 78728 (US); James, Nigel Victor, Austin Texas 78754 (US); Jreij, Elie Antoun, Austin Texas 78754 (US); Taborga, Jorge Roberto, Austin Texas 78758 (US)
(74) Representative: Fuchs, Franz-Josef, Dr.-Ing.

(56) References cited:
- US-A- 4 291 198
- US-A- 4 585 908
- TELESIS, vol. 12, no. 2, 1985, OTTAWA, CA, pages 21-25; R. BLOEDEN ET AL.: 'Touchphone : a new generation in telephone design'

## Description

This invention relates in general to the field of telephone devices and in particular to telephone devices which include programmable keys associated therewith. Still more particularly, the present invention relates to methods whereby a programmable key may be set to perform a selected function by means of an application within an associated processor.

Key telephone systems are well known in the prior art. Utilizing such systems a particular telephone station set may have the capability of direct access or connection to a plurality of lines or trunks connected to a Private Branch Exchange (PBX) or Central Office. Such systems have also been developed in which key telephone station sets may signal and communicate with other key telephone station sets in a so-called "intercom" mode. In older systems these features are realized by terminating all of the line conductors for each of the communication lines, whether they be Central Office lines or intercom lines, directly at the telephone station set, and by providing a key or button for each line. The particular line to be utilized by the telephone station set is user accessed by physically depressing the key for that line. The depressing of the key creates an electrical connection between the station set and the conductors to that line. Additional keys are generally provided for placing a line in a hold condition where a second line is to be connected to the station set in order to complete a call over the second line without disrupting the connection to the first line. Many other special services have also been provided by such keys in known systems such as conference calling, exclusion and exclusion release, paging, etc.

More recently, systems have been provided in which electronic key telephone stations may be connected to a local switching network via only a single pair of conductors and a data channel. The data channel generally comprises four conductors over which time division multiplex signals are transmitted between each telephone station set and a key service unit. The key service unit may be a central computer which is utilized to communicate with each station set. The key service unit may be utilized to provide processing for each key on the key telephone set by interrogating the data channel to determine which keys have been selected.

Still more recently, telephone station sets have been proposed which incorporate a stored program computer which is built into the telephone station set so that it may operate in a total key telephone system to provide numerous features. Such features include Central Office line selection; placing an access Central Office line on hold; privacy on a Central Office line; privacy release; hot line functions; paging functions; do not disturb; line identification; and Central Office line conferencing, and other features.

Still another advance in the electronic key telephone station art involves the utilization of repertory dialers which are accessories which may be connected to standard telephones or form a part of an electronic telephone to automate the dialing of frequently utilized numbers which are stored within a memory device associated with the dialer. Such dialers enable an operator to initiate a telephone call by the depression of a single key. Generally, such dialers are programmed manually by selecting a program mode and manually entering the telephone number which the operator desires to have associated with a particular key. Still more sophisticated devices utilize complex memory devices wherein telephone numbers and associated textual messages are stored together. A desired telephone number may then be accessed by accessing the textual message which may comprise a name associated with the telephone number.

While all of the aforementioned techniques represent an advance in the telephone art, none of these techniques permits a particular key on a telephone station to be associated with a selected data or telephony function. Therefore, it should be obvious that a need exists for a method whereby selected data or telephony functions may be efficiently associated with selected keys of a key telephone station.

It is therefore one object of the present invention to provide a method for permitting application definition of telephone keys.

It is another object of the present invention to provide a method for permitting application definition of telephone keys by an associated processor.

It is yet another object of the present invention to provide a method for permitting application definition of telephone keys which permits a specific data or telephony function to be associated with a repertory dialing key.

The foregoing objects are achieved as is now described. A selected command sequence from an associated processor is coupled to a telephone apparatus and utilized to identify a particular key and the desired data or telephony function to be associated with that key. Thereafter, a momentary depression of that key will automatically cause the implementation of the desired function without the necessity of repeated key strokes by the operator. In a preferred embodiment of the present invention, the selected command sequence may also be utilized to selectively and intermittently energize a light emitting diode associated with a particular key in order to provide a visual indication of the status of the function associated therewith.

The novel features believed characteristic of the invention are set forth in the appended claims. The invention itself however, as well as a preferred mode of use, further objects and advantages thereof, will best be understood by reference to the following detailed description of an illustrative embodiment when read in conjunction with the accompanying drawings, wherein:
Figure 1 depicts a pictorial representation of a communication system which may be utilized in accordance with the method of the present invention;
Figure 2 depicts a high level block diagram of the communication system of Figure 1;
Figure 3 depicts a logic flow chart illustrating the method whereby a particular data or telephony function may be associated with a selected telephone key in accordance with the method of the present invention;
Figure 4 depicts a logic flow chart which illustrates the control of a light emitting diode associated with a particular key in accordance with the method of the present invention; and

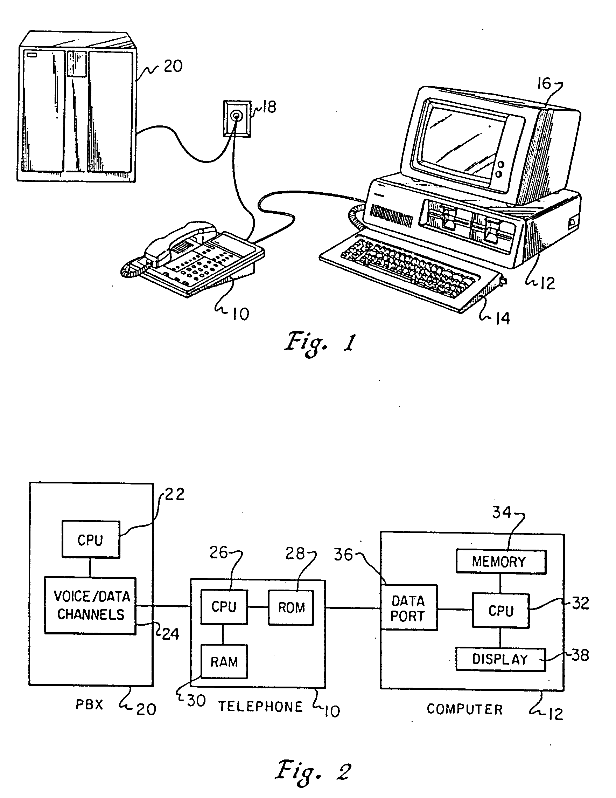

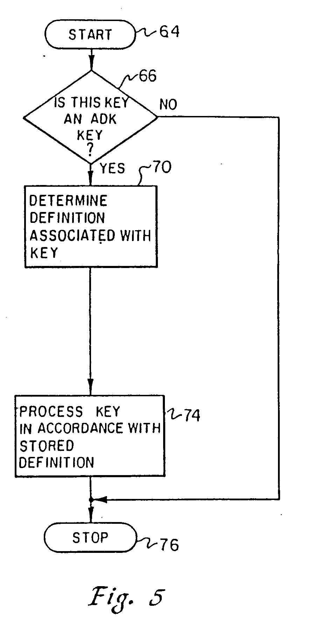

Figure 5 depicts a logic flow chart illustrating the selection of a specific data or telephony function and the processing thereof in accordance with the method of the present invention. With reference now to the figures, and in particular with reference to Figure 1, there is depicted a pictorial representation of a communication system which may be utilized in accordance with the method of the present invention. As may be seen, the communication system includes a telephone 10 which preferably permits both voice and data communication. Telephone 10 may be implemented utilizing any telephone having a data/telephony capability, such as the ROLMphone 244PC, manufactured by International Business Machines Corporation. Telephone 10 is coupled, via a standard EIA-232D cable to a serial asynchronous port within computer 12 and preferably includes a plurality of repertory dial keys, as illustrated, each of which includes a light emitting diode associated therewith.

Computer 12 within the depicted system is preferably provided by utilizing an IBM Personal Computer, an IBM Personal Computer/2 or other similar system. As those skilled in this art will appreciate, computer 12 generally includes both a keyboard 14 and a video display device 16, which may be utilized to allow operator input and to provide discernible messages to an operator of the communication system depicted.

In the system illustrated, telephone 10 may be utilized for data communications in a manner very similar to that of a modem due to the fact that the ROLMphone 244PC will support the AT command set which is utilized in most modems. To permit such communication, telephone 10 is connected to a telecommunication system such as a Private Branch Exchange (PBX) 20 which may be implemented utilizing the ROLM Computerized Branch Exchange (CBX). This connection is preferably made via a distributed wiring system which includes a plurality of telephone outlets 18.

Referring now to Figure 2, there is depicted a high level block diagram of the communication system depicted in Figure 1. As may be seen, telephone 10 preferably includes a Central Processing Unit (CPU) 26 as well as both Read-Only-Memory (ROM) 28 and Random-Access-Memory (RAM) 30, which may be utilized in a manner well known in the art to store the control sequences utilized by Central Processing Unit 26 to operate telephone 10 in accordance with the method of the present invention. In the depicted embodiment of the present invention, Central Processing Unit 26 is preferably implemented utilizing a Motorola 68000 processor. Of course, those skilled in this art will appreciate that telephone 10 will also include circuitry which supports a databus as well as the telephone and audio selections of telephone 10.

As is typical of communication systems of this type, Private Branch Exchange 20 also includes a Central Processing Unit 22 which may be utilized to control the activity of voice/data channels 24. Finally, computer 12 also includes a Central Processing Unit 32 which is coupled, in a manner well known in the computer art, to memory 34, data port 36 and display driver 38. Of course, memory 34 will generally consist of a combination of Read-Only-Memory and Random-Access-Memory as well as those types of memory typically supported on magnetic media such as floppy disk.

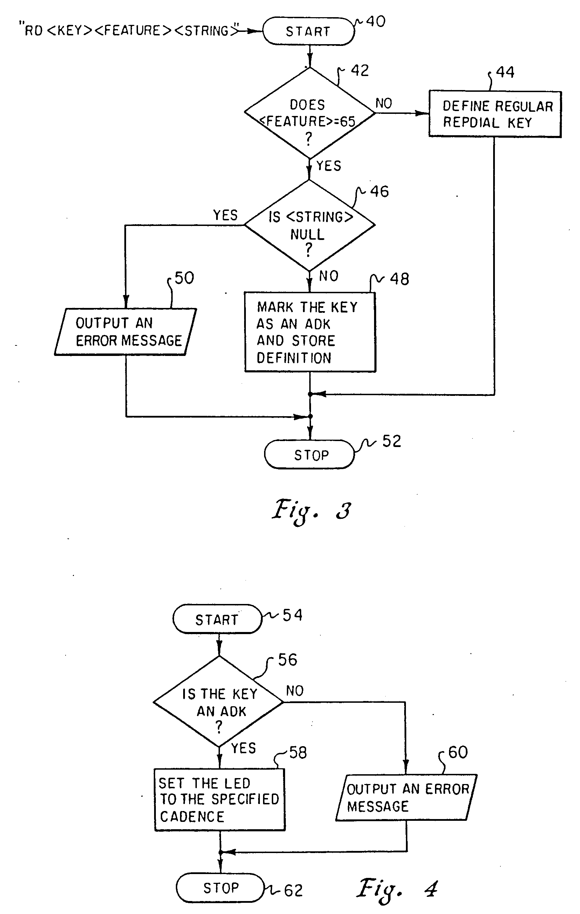

With reference now to Figure 3, there is depicted a logic flow chart illustrating the method of the present invention whereby a particular data or telephony function may be associated with a selected key. As is illustrated, the method of the present invention begins at block 40 where a repertory dial key definition command is received from the operator of computer 12. Such commands are coupled, via data port 36, to telephone 10 (see Figure 2). Central Processing Unit 26 within telephone 10 is programmed to respond to such commands which are presented in the following format "RD (KEY) (FEATURE) (STRING)" wherein the "RD" identifies the selected command sequence as a repertory dial definition command.

The "KEY" portion of the command is utilized to identify a particular repertory dial key which is to be associated with the desired data or telephony function. In the ROLMphone 244PC there are up to eighteen such repertory dial keys; however, those skilled in the art will appreciate that the method of the present invention may be applied to any telephone system having a selected number of repertory dial keys.

Next, the "FEATURE" portion of the command is utilized to determine whether or not the repertory dial key is to be programmed to dial a selected telephone number, perform a selected telephony feature, or to invoke a particular data or telephony function. In the depicted embodiment of the present invention when the "FEATURE" portion of the command is equal to "65," the repertory dial command is being utilized to program a particular key to invoke a desired data or telephony function.

Next, the "STRING" portion of the command is utilized to specify the particular data or telephony function which is to be invoked upon the depression of the selected repertory dialing key. In the depicted embodiment of the present invention, the "STRING" portion of the command is preferably a string of up to thirty characters which is non-blank and which contains no embedded blanks.

In the event the operator has entered a repertory dial definition command, block 42 is utilized to illustrate a determination of whether or not the "FEATURE" portion of the command is equal to "65," signifying the desire on the part of the operator to define a particular data or telephony function to be associated with the identified repertory dial key. If the "FEATURE" portion of the command is not equal to "65" then block 44 illustrates the definition of a repertory dial key in the normal manner associated with such keys. Thereafter, the process terminates, as depicted at block 52.

However, in the event the "FEATURE" portion of the command is equal to "65," then block 46 depicts the determination of whether or not the "STRING" portion of the command contains a null or blank. If so, block 50 illustrates the outputting of an error message to the operator indicating that the desired data or telephony function cannot be programmed utilizing the data provided. Thereafter, the process terminates as illustrated at block 52.

In the event the "STRING" portion of the command sequence does not contain blanks or nulls and is in the proper format, then block 48 depicts the marking of the identified repertory dial key as an Application Definable Key (ADK) and the definition associated with that key, as determined by the "STRING" portion of the command sequence, is stored within memory for future utilization.

Referring now to Figure 4, there is depicted a logic flow chart which illustrates the controlling of a light emitting diode associated with a particular repertory dialing key, in accordance with the method of the present invention. As above, the process begins at block 54 where a command from computer 12 is received at telephone 10, in accordance with a selected data or telephony function, to control the light emitting diode associated with a particular key. Block 56 is utilized to determine whether or not the key selected is an Application Definable Key (ADK) and if not, block 60 illustrates the outputting of an error message prior to process termination as illustrated in block 62. However, in the event the key selected is an Application Definable Key (ADK) then block 58 is utilized to illustrate the selective and intermittent energization of the light emitting diode associated with the selected key in accordance with a cadence which is specified within the definition of the selected function.

In this manner, an associated light emitting diode may be utilized to indicate a selected state, such as the timing out of an event or the receipt of a message. The selected cadence, in the depicted embodiment of the present invention, may be one of eight previously specified cadences including off; flash; slow reverse wink; wink; fast flash; medium wink; on; and, flicker. Those skilled in the art will appreciate that these techniques may be simply and easily utilized to provide a visual indication which may be associated with the selected data or telephony function. Finally, with reference to Figure 5, there is depicted a logic flow chart which illustrates the selection of a specific data or telephony function and the processing thereof in accordance with the method of the present invention. As above, the process begins at blocks 64 and 66 with the interrogating of telephone 10 by computer 12 to determine whether or not an ADK key has been depressed. If an ADK key has not been depressed, the process terminates as illustrated in block 76.

If the key which has been depressed is an Application Definable Key (ADK), an identification of that key is stored by telephone 10 and output to computer 12 in response to a periodic interrogation of telephone 10 by computer 12. Next, block 70 is utilized to illustrate the determination by computer 12 of the definition which is associated with that key. Those skilled in the art will appreciate that such definitions may be easily stored in a memory device associated with Central Processing Unit 32 of computer 12. Next, block 74 illustrates the processing of the Application Definable Key (ADK) by computer 12 in accordance with the stored definition and the process terminates as illustrated in block 76.

Those skilled in the art will appreciate upon reference to the foregoing specification that a method has been provided whereby a repertory dial key may be defined by an application within an associated processor to invoke a particular data or telephony function. In this manner, the repertory dial keys of a telephone may be programmed to allow them to be utilized as "hot keys" for the purpose of rapidly invoking a particular data or telephony function. Further, the light emitting diode associated with each such key may be utilized to further indicate the state of the function associated with that key.

## Claims

1. A method of defining a specific function associated with a particular key of a plurality of keys associated with a telephone, wherein said telephone is coupled to an associated external processor, said method comprising the steps of:
transmitting a selected command sequence from said associated external processor, said selected command sequence specifying said specific function;
receiving said selected command sequence at said telephone; and
storing the definition of said specific function associated with said particular key of said plurality of keys associated with said telephone in response to said selected command sequence.

2. A method of defining a specific function associated with a particular key of a plurality of keys associated with a telephone according to Claim 1 wherein said selected command sequence includes an identification of said particular key.

3. A method of defining a specific function associated with a particular key of a plurality of keys associated with a telephone according to Claim 1 wherein said selected command sequence includes an identification of said specific function.

4. A method of defining a specific function associated with a particular key of a plurality of keys associated with a telephone according to Claim 3 wherein said associated external processor includes memory means associated therewith and wherein a definition associated with said specific function is stored therein.

5. A method of defining a specific function associated with a particular key of a plurality of keys associated with a telephone according to Claim 1 wherein each of said plurality of keys includes a light emitting diode associated therewith and wherein said light emitting diode associated with said particular key is energized in accordance with said selected command sequence.

6. A method of defining a specific function associated with a particular key of a plurality of keys associated with a telephone according to Claim 1 wherein said light emitting diode associated with said particular key is energized intermittently in accordance with said selected command sequence.

7. A method of accessing a specific function of a plurality of functions stored within a processor system having a key telephone station associated therewith, said method comprising the steps of:
depressing a key at said key telephone station associated with a predefined specific function;
transmitting a periodic interrogation command from said processor system to said key telephone station;
transmitting an identification of said predefined specific function associated with said depressed key from said key telephone station to said processor system in response to said periodic interrogation command; and
accessing said predefined specific function stored within said processor system in response to said transmitted identification.

8. A method of accessing a specific function of a plurality of functions stored within a processor system having a key telephone station associated therewith according to Claim 7 further including the step of:
processing said specific function after accessing thereof.

## Patentansprüche

1. Verfahren zum Definieren einer spezifischen Funktion, die mit einer bestimmten Taste einer Mehrzahl von mit einem Fernsprecher verbundenen Tasten verbunden ist, wobei der besagte Fernsprecher an einen zugehörigen externen Prozessor angekoppelt ist und wobei das besagte Verfahren folgende Schritte umfaßt:
Übertragen einer ausgewählten Befehlsfolge vom besagten zugehörigen externen Prozessor, wobei die besagte ausgewählte Befehlsfolge die besagte spezifische Funktion angibt;
Empfangen der besagten ausgewählten Befehlsfolge am besagten Fernsprecher; und
Speichern der Definition der besagten spezifischen Funktion, die mit der besagten bestimmten Taste der besagten Mehrzahl von mit dem besagten Fernsprecher verbundenen Tasten verbunden ist, als Reaktion auf besagte ausgewählte Befehlsfolge.

2. Verfahren zum Definieren einer spezifischen Funktion, die mit einer bestimmten Taste einer Mehrzahl von mit einem Fernsprecher verbundenen Tasten verbunden ist, nach Anspruch 1, wobei die besagte ausgewählte Befehlsfolge eine Kennzeichnung der besagten bestimmten Taste enthält.

3. Verfahren zum Definieren einer spezifischen Funktion, die mit einer bestimmten Taste einer Mehrzahl von mit einem Fernsprecher verbundenen Tasten verbunden ist, nach Anspruch 1, wobei die besagte ausgewählte Befehlsfolge eine Kennzeichnung der besagten spezifischen Funktion enthält.

4. Verfahren zum Definieren einer spezifischen Funktion, die mit einer bestimmten Taste einer Mehrzahl von mit einem Fernsprecher verbundenen Tasten verbunden ist, nach Anspruch 3, wobei der besagte zugehörige externe Prozessor damit verbundene Speichermittel enthält und wobei eine mit der besagten spezifischen Funktion verbundene Definition darin gespeichert ist.

5. Verfahren zum Definieren einer spezifischen Funktion, die mit einer bestimmten Taste einer Mehrzahl von mit einem Fernsprecher verbundenen Tasten verbunden ist, nach Anspruch 1, wobei der jede der besagten Mehrzahl von Tasten eine damit verbundene Leuchtdiode enthält und wobei die besagte mit der besagten bestimmten Taste verbundene Leuchtdiode entsprechend der besagten ausgewählten Befehlsfolge angesteuert wird.

6. Verfahren zum Definieren einer spezifischen Funktion, die mit einer bestimmten Taste einer Mehrzahl von mit einem Fernsprecher verbundenen Tasten verbunden ist, nach Anspruch 1, wobei die besagte mit besagter bestimmter Taste verbundene Leuchtdiode intermittierend entsprechend der besagten ausgewählten Befehlsfolge angesteuert wird.

7. Verfahren zum Zugreifen auf eine spezifische Funktion einer Mehrzahl von Funktionen, die in einem Prozessorsystem mit einer damit verbundenen Reihenanlagennebenstelle gespeichert sind, wobei besagtes Verfahren folgende Schritte umfaßt:
Drücken einer mit einer vordefinierten spezifischen Funktion verbundenen Taste an besagter Reihenanlagennebenstelle;
Übertragen eines periodischen Abfragebefehls vom besagten Prozessorsystem an besagte Reihenanlagennebenstelle;
Übertragen einer Kennzeichnung der besagten, mit besagter gedrückter Taste verbundenen vordefinierten spezifischen Funktion von besagter Reihenanlagennebenstelle an besagtes Prozessorsystem als Reaktion auf besagten periodischen Abfragebefehl; und
Zugreifen auf die besagte im besagten Prozessorsystem gespeicherte vordefinierte spezifische Funktion als Reaktion auf besagte übertragene Kennzeichnung.

8. Verfahren zum Zugreifen auf eine spezifische Funktion einer Mehrzahl von Funktionen, die in einem Prozessorsystem mit damit verbundener Reihenanlagennebenstelle gespeichert sind, nach Anspruch 7, weiterhin mit folgendem Schritt:
Verarbeiten der besagten spezifischen Funktion nach Zugreifen auf diese.

## Revendications

1. Un procédé pour définir une fonction spécifique associée à une touche particulière parmi un ensemble de touches associées à un poste téléphonique, dans lequel le poste téléphonique est connecté à un processeur externe associé, ce procédé comprenant les étapes suivantes :
on émet une séquence d'ordre sélectionnée, à partir du processeur externe associé, cette séquence d'ordre sélectionnée spécifiant la fonction spécifique;
on reçoit la séquence d'ordre sélectionnée dans le poste téléphonique; et
on enregistre la définition de la fonction spécifique qui est associée à la touche particulière parmi l'ensemble de touches associées au poste téléphonique, sous la dépendance de la séquence d'ordre sélectionnée.

2. Un procédé pour définir une fonction spécifique associée à une touche particulière parmi un ensemble de touches associées à un poste téléphonique selon la revendication 1, dans lequel la séquence d'ordre sélectionnée comprend une identification de cette touche particulière.

3. Un procédé pour définir une fonction spécifique associée à une touche particulière parmi un ensemble de touches associées à un poste téléphonique selon la revendication 1, dans lequel la séquence d'ordre sélectionnée comprend une identification de la fonction spécifique.

4. Un procédé pour définir une fonction spécifique associée à une touche particulière parmi un ensemble de touches associées à un poste téléphonique selon la revendication 3, dans lequel le processeur externe associé comprend des moyens de mémoire qui lui sont associés et dans lequel une définition associée à la fonction spécifique est enregistrée dans ces moyens de mémoire.

5. Un procédé pour définir une fonction spécifique associée à une touche particulière parmi un ensemble de touches associées à un poste téléphonique selon la revendication 1, dans lequel une diode électroluminescente est associée à chaque touche de l'ensemble de touches et dans lequel la diode électroluminescente qui est associée à la touche particulière est activée conformément à la séquence d'ordre sélectionnée.

6. Un procédé pour définir une fonction spécifique associée à une touche particulière parmi un ensemble de touches associées à un poste téléphonique selon la revendication 1, dans lequel la diode électroluminescente qui est associée à la touche particulière est activée par intermittence conformément à la séquence d'ordre sélectionnée.

7. Un procédé pour accéder à une fonction spécifique parmi un ensemble de fonctions enregistrées dans un système de processeur auquel est associé un poste téléphonique à touches, ce procédé comprenant les étapes suivantes :
on appuie sur une touche du poste téléphonique à touches qui est associée à une fonction spécifique prédéfinie; on émet un ordre d'interrogation périodique à partir du système de processeur, vers le poste téléphonique à touches;
on émet une identification de la fonction spécifique prédéfinie qui est associée à la touche sur laquelle on a appuyé, à partir du poste téléphonique à touches vers le système de processeur, en réponse à l'ordre d'interrogation périodique; et
on accède à la fonction spécifique prédéfinie qui est enregistrée dans le système de processeur sous la dépendance de l'identification émise.

8. Un procédé pour accéder à une fonction spécifique parmi un ensemble de fonctions enregistrées dans un système de processeur auquel est associé un poste téléphonique à touches selon la revendication 7, comprenant en outre l'étape suivante :
on traite la fonction spécifique après avoir accédé à cette fonction.
